# EUROPEAN PATENT APPLICATION

(11) **EP 0 527 027 A1**
(43) Date of publication of application: **10.02.1993**
(21) Application number: 92307070.0
(22) Date of filing: 03.08.1992
(51) Int. Cl.: A01C 23/04, A01M 7/00, B05B 7/32

(54) **Fluid dispenser**

(30) Priority: 07.08.1991 GB 9117029
(71) Applicant: HUNTING ENGINEERING LIMITED, Bedfordshire MK45 2HD (GB)
(72) Inventor: Poole, Neil John, Letchworth, Hertfordshire SG6 2TG (GB)
(74) Representative: Bowles, Sharon Margaret

(57) **Abstract**

A liquid mixing system having a mixing cylinder (1) in which a movable piston (2) divides a liquid additive chamber (3) from a displacing liquid chamber (4). Displacing liquid, usually a proportion of a carrier liquid with which the additive liquid is to be mixed, is introduced to the displacing chamber to eject additive fluid to a mixing area where it is mixed with the carrier fluid. The additive chamber is connected to a bulk source of additive liquid from which it can be refilled and to which surplus additive can be returned. Displacing fluid is removed from the displacing chamber via a return line connected to a venturi. Suction is created in the venturi line through return of a carrier fluid through the venturi.

## Description

This invention relates to mixing liquids, and in particular to the mixing of one or more additive liquid, such as a concentrate, to a carrier liquid.

It will be appreciated that in such systems the additive liquid or liquids are usually supplied in lesser volume than the carrier liquid, but this is not essential.

UK Patent No. 2216817 describes a system in which the additive liquid is provided in a cylinder with a movable piston. Another liquid is used to displace the piston and cause the additive liquid to be introduced into the carrier as the mixture is used.

An advantage of this type of system is that additive and carrier are only mixed during use, i.e. it eliminates pre-mixing and waste or hazard from left over mixture. The abovementioned patent suggests a valved system using a suction pump to return carrier from the cylinder to a storage tank and for introducing additive liquid into the cylinder. However there is no detailed information concerning suitable mechanisms for achieving this.

The present invention is directed towards providing an additive liquid filling system for such a mixing apparatus that may additionally or alternatively also enable introduction of more than one additive liquid into a carrier liquid.

Accordingly the invention provides a liquid mixing system comprising at least one cylinder having a movable piston separating a first chamber from a second chamber, the first chamber being connectable via a first line and valve to a bulk source of an additive liquid and via a second line and valve to a mixing area, the second chamber being connected via a metering line having a valve and metering pump to a source of displacing liquid and via a second valve to a return line for the displacing liquid, the arrangement being that the valves in said first line and return line are opened and the valves in the second line and metering line are closed to draw displacing fluid out of the second chamber and fill the first chamber with additive liquid, the valve settings are reversed to eject additive fluid from the first chamber to the mixing area where it is mixed with a carrier fluid, and the valve in the metering line and first line are opened with the other valves closed to return remaining additive back to the bulk source.

The invention is now described by way of example with reference to the accompanying drawings, in which:
Figure 1 is a schematic diagram of a fluid mixing system incorporating a refill supply;
Figure 2 is a similar diagram showing valve locations;
Figure 3 shows in more detail the incorporation of a plurality of metering cylinders; and
Figure 4 shows a modification that permits simultaneous mixing and refilling.

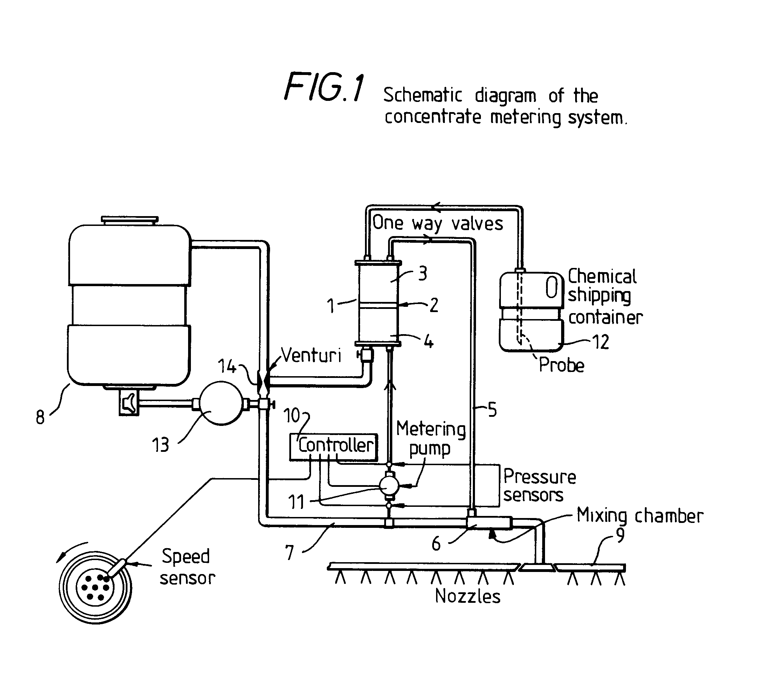

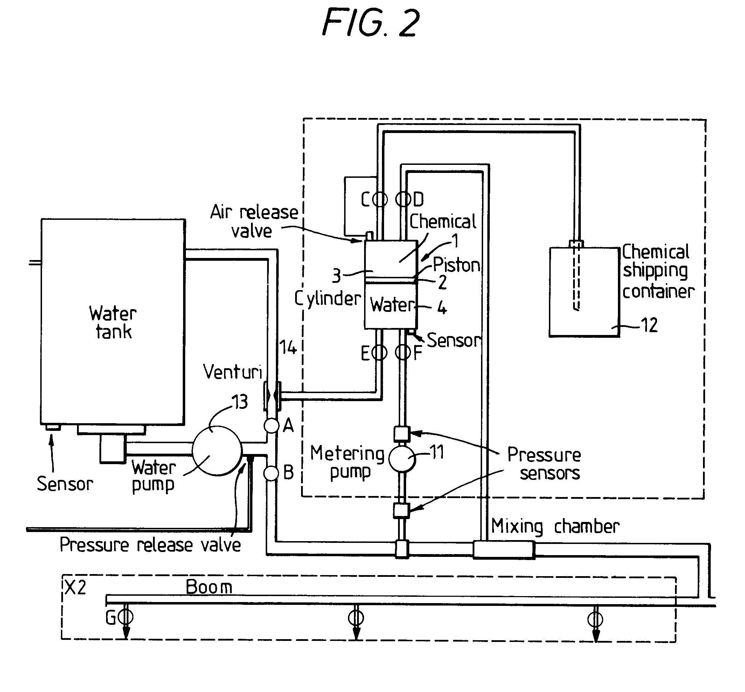

Referring to Figures 1 and 2, a fluid mixing system comprises a metering cylinder 1 provided with a movable piston 2 dividing a first chamber 3 for additive liquid from a second chamber 4 for a displacing liquid. When the chamber 3 contains additive liquid it can be progressively forced out of the chamber, along line 5 to a mixing chamber 6 by the introduction of displacing liquid into chamber 4, urging piston 2 upwardly as viewed in the drawing.

In the mixing chamber the additive liquid is combined with a carrier liquid pumped by a main pump 13 along line 7 from a carrier liquid tank 8, the mixture is then supplied to a spray boom 9. The displacing fluid introduced to chamber 4 is a proportion of the carrier fluid that passes along line 7. The proportion, which in turn controls the amount of additive fluid displaced from chamber 3, and hence the concentration of the mixture, is controlled by controller 10 which monitors variables such as carrier liquid pressure and speed of travel of the spray boom over the ground (slower movement requiring a lower concentration of additive to distribute a given amount of additive per unit area).

Referring to Figure 2, valves A to F control the change from mixing cycle to refill cycle. In the mixing cycle valves A and E are closed and B and F open so that carrier liquid from the tank cannot enter chamber 4, only carrier liquid passing through a metering pump 11 and through open valve F can enter chamber 4. Valve C to an additive bulk supply 12 is closed, and if the bulk supply is remote from the sprayer the connecting pipe is disconnected. Valve D is open to allow additive liquid to flow to the mixing chamber.

To refill the chamber 3, the line to the bulk supply is connected and the valve settings are reversed. Valve C is opened to enable a refill supply to enter from the bulk container and valve D is closed to prevent a 'short circuit' of fluid from the bulk supply to the mixing chamber. Valves A and E are opened and valves B and F are closed so that the main pump 13 pumps water up (as viewed) through a venturi 14 causing carrier liquid to be sucked out of the cylinder 4, resulting in downward movement of piston 2 and suction of refilling additive into chamber 3. It will be realised that this arrangement with a venturi eliminates need for a second pump or drive for removing carrier fluid from the chamber 4.

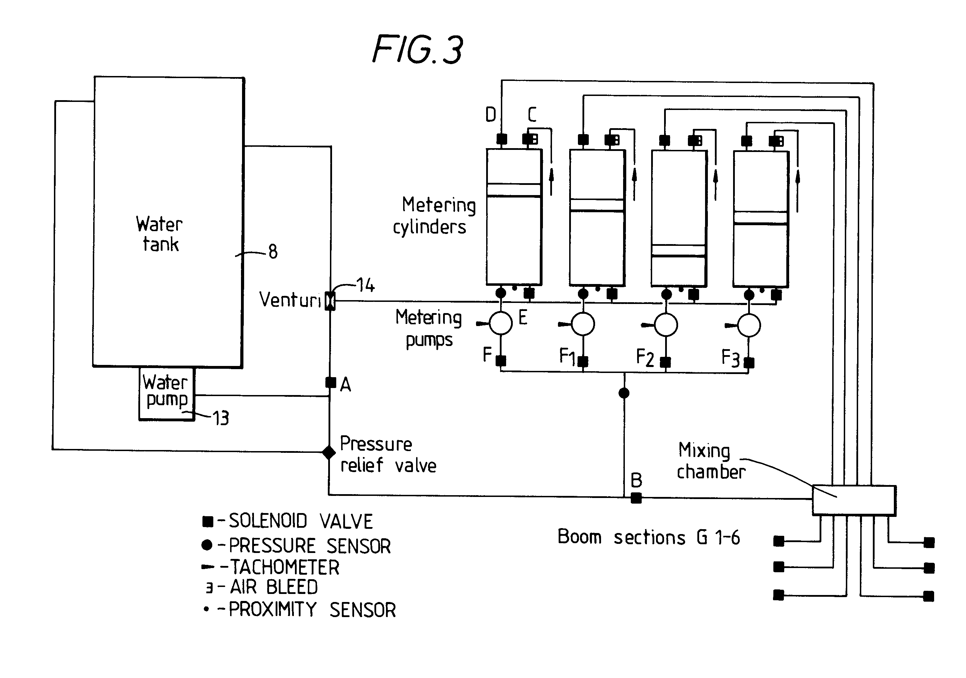

There are instances when it is desirable to add more than one additive liquid to the carrier liquid. Figure 3 illustrates a system having multiple measuring cylinders, each of which may contain a different additive liquid that can be added sequentially, simultaneously or in varying combinations with the other liquids by selective operation of valves F, F₁, F₂ and F₃.

The system illustrated in Figure 3 may also be used with the same additive in two or more of the measuring cylinders. This is useful for example to enable higher concentrations to be released and/or to prolong the duration of application of mixed liquids between refills.

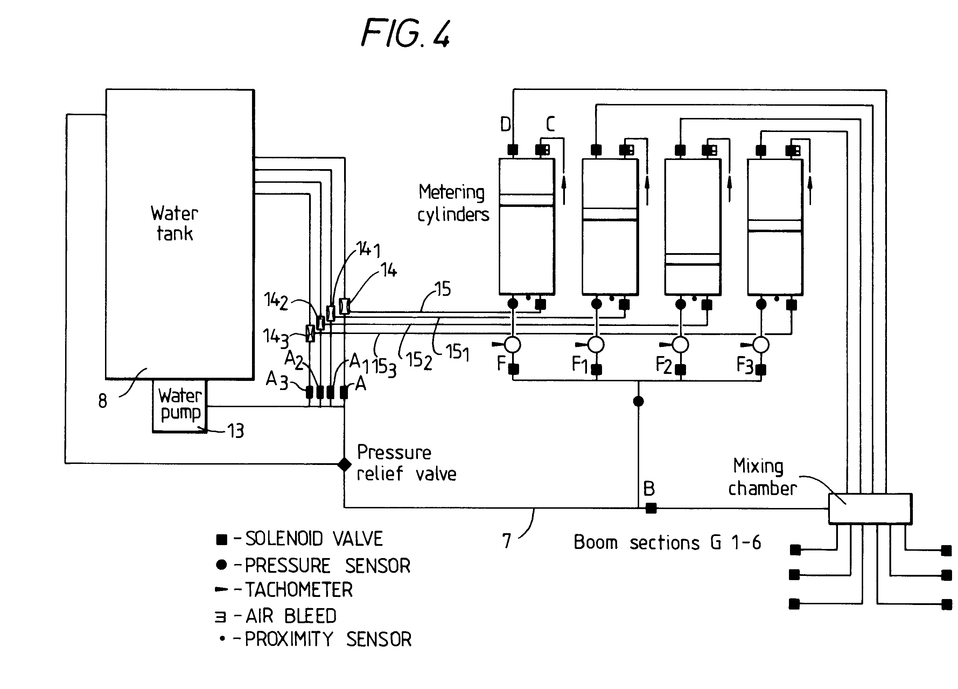

It will be appreciated that with the system described with respect to Figure 2, during the refill operation, mixing ceases. This does not matter if the bulk storage container is static and not for example carried by the spraying vehicle. However in some instances small 'bulk' storage containers may be carried on board. In this latter instance a modification of the multi-cylinder arrangement, shown in Figure 4, enables refill of individual cylinders to take place in a staggered sequence, enabling simultaneous mixing to continue from another cylinder.

In Figure 4, each measuring cylinder is provided with a separate displacement liquid removal circuit. The main pump 13 supplies carrier along line 7 where, subject to the setting of values F, F₁, F₂ and F₃ it passes through a respective metering pump and respective measuring cylinder chamber 4. However instead of a single return line and venturi, each measuring cylinder has a separate return line 15, 15₁, 15₂ and 15₃ connecting with a respective venturi 14, 14₁, 14₂ and 14₃ on respective lines 17, 17₁, 17₂ and 17₃ with valves A, A₁, A₂ and A₃. Each of the valves A, A₁, A₂ and A₃ can be separately operated, along with the other valves associated with each measuring cylinder so that one cylinder can be refilling while others are mixing. The sequence of refilling is preferably controlled to avoid excessive pressure surges and drops in line 7, for example with one cylinder refilling while the other three are on standby or mixing.

When mixing is to be discontinued, the additive fluid in the measuring cylinders is returned to the bulk storage container by closing valve B and D and opening valve C.

The metering pumps measure, in terms of angular rate and the pressure differential, the rate of flow of carrier fluid into the second chamber of the measuring cylinders. This is directly proportional to the rate of ejection of the additive fluid from the first chamber. Thus the metering pump flow rate signal may be integrated and calibrated to be used as a measure of the quantity of additive dispensed and, from a knowledge of full or starting values, the quantity remaining in each cylinder. A predetermined level may be used as a trigger to commence a refill cycle.

The overall operation of the system especially the multi-cycle system is controlled by a digital processor, to which valve status indications, metering signals and distribution data are input in addition to concentration requirements.

## Claims

1. A liquid mixing system comprising at least one cylinder (1) having a movable piston (2) separating a first chamber (3) from a second chamber (4), the first chamber being connectable via a first line and valve (C) to a bulk source (12) of an additive liquid and via a second line and valve (D) to a mixing area, the second chamber being connected via a metering line having a valve (F) and metering pump (11) to a source of displacing liquid and via a second valve (E) to a return line for the displacing liquid, the arrangement being that the valves in said first line and return line are opened and the valves in the second line and metering line are closed to draw displacing fluid out of the second chamber and fill the first chamber with additive liquid, the valve settings are reversed to eject additive fluid from the first chamber to the mixing area where it is mixed with a carrier fluid, and the valve in the metering line and first line are opened with the other valves closed to return remaining additive back to the bulk source.

2. A liquid mixing system according to claim 1 in which the displacing fluid comprises a proportion of the carrier fluid and the return line comprises a loop having a second valve and a venturi via which at least a proportion of the carrier fluid is pumped so that when the return line valve is opened the suction from the venturi withdraws the displacing carrier fluid from the second chamber.

3. A liquid mixing system according to claim 1 or claim 2 in which the valve states are controlled by digital controller.

4. A liquid mixing system according to any preceding claim in which the flow of displacing fluid into the second chamber is used to provide a measurement of dispensed additive.
